Europäisches Patentamt

European Patent Office

Office européen des brevets

(11) Veröffentlichungsnummer: **0 099 033**
**B1**

(12) **EUROPÄISCHE PATENTSCHRIFT**

(19)

(45) Veröffentlichungstag der Patentschrift:
04.11.87

(21) Anmeldenummer: **83106428.2**

(22) Anmeldetag: **01.07.83**

(51) Int. Cl.⁴: **F 16 L 37/24, F 16 L 37/22**

(54) Verbindungsstück für Schlauchleitungen von Hochdruckreinigungs- und -sprühgeräten.

(30) Priorität: **16.07.82 DE 3226571**

(43) Veröffentlichungstag der Anmeldung:
**25.01.84 Patentblatt 84/4**

(45) Bekanntmachung des Hinweises auf die Patenterteilung:
**04.11.87 Patentblatt 87/45**

(84) Benannte Vertragsstaaten:
**AT CH DE FR GB IT LI**

(56) Entgegenhaltungen:
**DE-A-2 164 378
DE-C-853 994
GB-A-562 840
LU-A-67 390
US-A-3 413 018**

(73) Patentinhaber: **Alfred Kärcher GmbH & Co.,
Leutenbacher Strasse 30- 40, D-7057 Winnenden
(DE)**

(72) Erfinder: **Schulze, Werner, Alpenrosenstrasse 5,
D-7057 Winnenden- Höfen (DE)**
Erfinder: **Gerich, Josef, Kernle 20, D-7057
Winnenden (DE)**
Erfinder: **Scheef, Emil, Schulstrasse 46, D-7050
Waiblingen (DE)**
Erfinder: **Dautel, Heinz, Akazienweg 24, D-7150
Backnang (DE)**

(74) Vertreter: **Hoeger, Stellrecht & Partner,
Uhlandstrasse 14c, D-7000 Stuttgart 1 (DE)**

## Beschreibung

Die Erfindung betrifft ein Verbindungsstück für Schlauchleitungen von Hochdruckreinigungs- und -sprühgeräten mit den Merkmalen des Oberbegriffs des Anspruchs 1, wie z. B. aus der DE-A-2 164 378 bekannt ist.

Für Hochdruckreinigungsgeräte und Hochdrucksprühgeräte müssen Schlauchkupplungen verwendet werden, die für diesen speziellen Einsatz besonders ausgebildet sind. Zunächst ist es wichtig, daß mit diesen Schlauchkupplungen auch bei hohem Druck (einige Hundert Bar) eine sichere und dauerhafte Verbindung herstellbar ist, die aber auch im drucklosen Zustand leicht gelöst werden kann. Wesentlich ist dabei weiterhin, daß diese Schlauchkupplungen besonders einfach aufgebaut sind, da bei einem komplizierten Aufbau mit vielen beweglichen Teilen die Gefahr besteht, daß durch Chemikalienablagerungen die Funktionsfähigkeit der Kupplung beeinträchtigt wird. Schließlich ist wesentlich, daß nicht versehentlich andere Schläuche als speziell für Hochdruckreinigungsgeräte ausgebildete Hochdruckschläuche an die Hochdruckreinigungsgeräte angeschlossen werden, denn nur die speziell ausgebildeten Hochdruckschläuche sind den hohen Drücken und den aggressiven Bedingungen gewachsen, die beim Betrieb von Hochdruckreinigungsgeräten auftreten.

Es sind Schlauchkupplungen bekannt, welche aus einem Nippel mit Nut einerseits und einer Hülse mit Radialbohrungen andererseits bestehen, wobei durch die Radialbohrungen Kugeln in den Hohlraum der Hülse hineinragen, die über eine verschiebbare, konisch ausgebildete und federbelastete Hülse je nach deren Stellung nach innen gedrückt oder in Offenstellung radial so weit frei sind, daß sie die Einführung des Nippels gestatten. Nach Einführung des Nippels und Loslassen der äußeren Verschiebehülse werden die Kugeln durch die Verschiebehülsen in die Hut des Nippels gedrückt und ergeben eine formschlüssige Verbindung. Bei der Verwendung solcher Kupplungen bei Hochdruckreinigungsgeräten ist nachteilig, daß diese Kupplung eine verhältnismäßig große Anzahl beweglicher Teile aufweist. Insbesondere die äußere Verschiebehülse und die Kugeln können durch Kalk- und Reinigungsmittelablagerungen blockieren, so daß die Funktionssicherheit dieser Kupplung nicht immer gewährleistet ist.

Bei anderen bekannten Hochdruckschlauchverbindungen wird ein Dichtkegel auf eine konische Dichtfläche über eine Verschraubung dichtend angepreßt. Zum Lösen und Verbinden dieser Schlauchkupplung sind mehrere Drehungen einer Überwurfmutter notwendig; jeder Kupplungs- oder Lösungsvorgang nimmt daher erhebliche Zeit in Anspruch.

Es ist Aufgabe der Erfindung, eine speziell für Hochdruckreinigungs- und Hochdrucksprühgeräte geeignete Schlauchverbindung vorzuschlagen, welche unempfindlich ist gegen hohe Drücke sowie Chemikalien- und Kalkablagerungen, die aber andererseits eine schnelle, sichere und unverwechselbare Verbindung der Schlauchleitung gestattet.

Diese Aufgabe wird bei einem Verbindungsstück der eingangs beschriebenen Art erfindungsgemäß durch die im kennzeichnenden Teil des Anspruchs 1 wiedergegebenen Merkmale gelöst.

Die erfindungsgemäße Schlauchverbindung hat einen äußerst robusten Aufbau und besteht nur aus wenigen Teilen, die in einfachster Weise zusammengesetzt werden können. Dabei sichert sich die Schlauchkupplung im Betrieb von selbst, da durch die Druckbeaufschlagung der Schlauchleitung die beiden Schlauchenden auseinandergezogen werden, so daß die Rastnasen am einen Schlauchteil in die Ausnehmungen der Rastvorsprünge am anderen Schlauchteil einrasten. Diese Einrastung verhindert eine Relativdrehung der beiden Schlauchenden um die Längsachse und somit auch ein Lösen der Schlauchverbindung, denn zum Lösen der Schlauchverbindung müssen die Schlauchenden nicht nur in axialer Richtung verschoben, sondern auch um die Längsachse gedreht werden.

Bei einer vorteilhaften Weiterbildung ist vorgesehen, daß die Hülse auf dem Nippel axial verschieblich ist und der Nippel einen stufenförmig sich erweiternden Endbereich aufweist, den die Hülse mit einem an ihrem schlauchseitigen Ende angeordneten, nach innen ragenden Ringflansch hintergreift. Die Hülse ist damit ein vom Nippel getrennt herstellbares Teil, welches vor dem Einsetzen des Nippels in die zugehörige Schlauchleitung von hinten auf den Nippel aufgeschoben wird.

Vorteilhaft ist es, wenn die Innendichtfläche des Nippels wulstartig in die Innenbohrung des Nippels hineinragt. Dieser wulstförmig nach innen hineinragende Bereich der Innendichtfläche bildet die eigentliche Dichtfläche gegenüber dem in den Nippel eingeschobenen Stutzen; vor und hinter dieser Dichtfläche springt die Innenwand des Nippels somit ein wenig zurück, so daß Kalk- und Chemikalienablagerungen in diesem Bereich das Ein- und Ausführen des Stutzens nicht behindern können.

Die Dichtwirkung kann verbessert werden, wenn der Stutzen als Dichtfläche eine in einer Außenringnut des Stutzens eingelegte Ringdichtung trägt.

Vorteilhaft ist es, wenn die Rastvorsprünge sich bis an das freie Ende der Hülse hin erstrecken und dadurch am offenen Ende der Hülse Umfangsbereiche mit geringerem Innendurchmesser und Umfangsbereiche mit größerem Innendurchmesser bilden. Dadurch wird das Zusammenstecken der Schlauchkupplung erleichtert, denn die Bedienungsperson erkennt bereits am offenen Ende der Hülse die Lage der Rastvorsprünge im Innern der Hülse, so daß der Stutzen von Anfang an in der richtigen Winkellage in die Hülse eingeschoben werden kann.

Günstig ist es, wenn die Anlageflächen für die Druckfeder durch die Rasten des Stutzens gebildet werden.

Bei einer vorteilhaften Ausgestaltung ist vorgesehen, daß die Rastnasen an den Rasten zumindest einseitig durch eine Gleitfläche begrenzt sind, die in einer schräg zur Stutzenlängsachse verlaufenden Ebene liegt, wobei die Rastnase zu ihrem freien Ende hin schmaler wird, und wenn die Ausnehmung im zugeordneten Rastvorsprung der Hülse komplementär ausgebildet ist. Die schräge Gleitfläche erleichtert das Lösen der Schlauchverbindung. Bei einer Drehung des Stutzens gegenüber dem Schlauchnippel werden die beiden Teile durch die Gleitfläche zwangsläufig auch in axialer Richtung verschoben, wobei die Rastnase aus der Ausnehmung des Rastvorsprunges herausgeschoben wird.

Die Rastnase kann bei einem bevorzugten Ausführungsbeispiel auf ihrer der Gleitfläche gegenüberliegenden Seite eine parallel zur Stutzenlängsachse verlaufende Seitenfläche aufweisen. Besonders vorteilhaft ist es, wenn die Rastnase auf ihrer der Gleitfläche gegenüberliegenden Seite ebenfalls durch eine schräge Seitenfläche begrenzt ist, die entgegen der Gleitfläche geneigt ist. Somit erhält man die oben beschriebene Wirkung der zwangsläufigen Axialverschiebung beim Verdrehen der Teile in beiden Richtungen; außerdem zentriert sich die Rastnase automatisch in den Rastausnehmungen, wenn die Schlauchverbindung unter Druck steht.

Die Rastnase kann an ihrem freien Ende durch eine Stirnfläche begrenzt sein, die in einer senkrecht zur Stutzenlängsachse verlaufenden Ebene liegt.

Vorzugsweise sind je zwei Rastvorsprünge bzw. Rasten vorgesehen, die sich paarweise diametral gegenüberliegen.

Dabei ist es günstig, wenn sich Rastvorsprünge und Rasten in Umfangsrichtung über jeweils weniger als 90° erstrecken.

Die nachfolgende Beschreibung bevorzugter Ausführungsformen der Erfindung dient im Zusammenhang mit der Zeichnung der näheren Erläuterung. Es zeigen:

Fig. 1 eine in Längsrichtung geschnittene Schlauchverbindung;

Fig. 2 eine Seitenansicht des an einem Schlauchende befestigten Schlauchstutzens;

Fig. 3 eine Schnittansicht längs Linie 3 - 3 in Fig. 2;

Fig. 4 eine Längsschnittansicht der den Schlauchnippel umgebenden Hülse und

Fig. 5 eine Ansicht der in Fig. 4 dargestellten Hülse in Richtung des Pfeiles A.

Die in der Zeichnung dargestellte Schlauchverbindung umfaßt einen mit einem ersten Schlauchende 1 dicht verbundenen Schlauchnippel 2 mit einer durchgehenden Innenbohrung 3. Der Schlauchnippel ist an seinem dem Schlauchende 1 abgewandten Teil in radialer Richtung erweitert, so daß sich zwischen dem Schlauchende 1 und seinem freien Ende eine radial nach außen vorspringende Stufe 4 bildet. In dem erweiterten Bereich weist auch die Innenbohrung 3 einen grösseren Durchmesser auf als in dem dem Schlauchende 1 benachbarten Bereich. Im erweiterten Teil des Schlauchnippels 2 bildet die Innenwand 5 der Innenbohrung 3 eine Innendichtfläche, die über einen Teil ihrer axialen Erstreckung wulstförmig nach innen in die Innenbohrung 3 hineinragt. Diese wulstförmige Verdickung 6 bildet die eigentliche Dichtfläche, wie dies weiter unten noch erläutert wird.

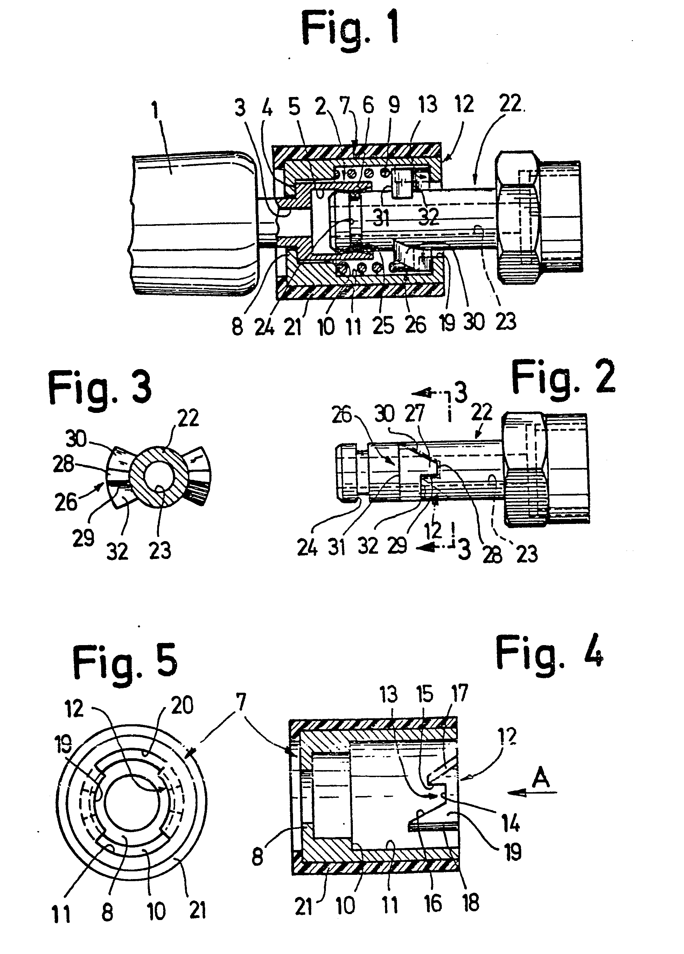

Der Schlauchnippel 2 ist von einer Hülse 7 umgeben, die durch einen radial nach innen weisenden Ringflansch 8 die Stufe 4 des Schlauchnippels 2 hintergreift und somit axial verschieblich, jedoch unverlierbar auf dem Schlauchnippel gehalten ist. Die Hülse ragt über das freie Ende des Schlauchnippels 2 hinaus und ist an ihrem freien Ende offen ausgebildet. Im Innern der Hülse befindet sich eine den Schlauchnippel 2 umgebende Schraubendruckfeder 9, die sich einerseits an einer Ringschulter 10 der Hülse 7 und andererseits an zwei an der Innenwand 11 der Hülse 7 diametral gegenüber angeordneten, in den Innenraum der Hülse hineinragenden Rastvorsprüngen 12 abstützt, deren Ausbildung sich insbesondere aus Fig. 4 ergibt. Diese Rastvorsprünge erstrecken sich in Umfangsrichtung nur so weit, daß zwischen den beiden Rastvorsprüngen ein freier Einschubbereich übrigbleibt. Auf ihrer dem Schlauchende 1 zugewandten Seite weist jeder Rastvorsprung 12 eine zum Schlauchende 1 offene Ausnehmung 13 auf, welche durch einen umfangsparallelen Boden 14, eine parallel zur Längsachse verlaufende seitliche Begrenzungsfläche 15 und eine schräg zur Längsachse verlaufende Gleitfläche 16 begrenzt wird (Fig. 4). Die Gleitfläche 16 ragt dabei in Richtung auf das Schlauchende 1 über das schlauchseitige Ende der seitlichen Begrenzungsfläche 15 hervor. Angrenzend an das schlauchseitige Ende der seitlichen Begrenzungsfläche 15 schließt sich eine ebenfalls gegenüber der Längsachse schräge Gleitfläche 17 an, die der Gleitfläche 16 im wesentlichen parallel verläuft und in dem dargestellten Ausführungsbeispiel bis an das freie Ende der Hülse reicht. Auf der gegenüberliegenden Seite wird der Rastvorsprung 12 durch eine parallel zur Längsachse der Hülse verlaufende Seitenfläche 18 begrenzt, die im wesentlichen parallel zur seitlichen Begrenzungsfläche 15 verläuft.

Die dem Schlauchende abgewandten Seite des Rastvorsprunges fluchtet mit dem offenen Ende der Hülse 7, so daß die Öffnung der Hülse 7 in der aus Fig. 5 ersichtlichen Weise durch die Rastvorsprünge begrenzte Umfangsbereiche 19 mit geringerem Innendurchmesser und zwischen den Rastvorsprüngen angeordnete Umfangsbereiche 20 mit größerem Innendurchmesser aufweist.

Die Hülse 7 wird von einer Schutzhülle 21 aus einem thermoplastischem Kunststoff umgeben, der einerseits der Wärmedämmung und andererseits der besseren Handhabung dient. Zu diesem Zweck kann die Schutzhülle an ihrem Außenumfang gerändelt sein.

Das andere Schlauchende trägt einen Stutzen 22, dessen Aussendurchmesser im wesentlichen dem Innendurchmesser der Innenwand 5 der Innenbohrung 3 im erweiterten Bereich entspricht. Der Stutzen 22 weist ebenfalls eine durchgehende Innenbohrung 23 auf; er kann auch am Hochdruckreinigungsgerät selbst angeordnet sein und dort den druckseitigen Ausgang bilden. In einer Umfangsnut 24 ist eine weichelastische Ringdichtung 25 eingelegt, die ein wenig über den Aussenumfang des Stutzens 22 hervorsteht.

Auf der Umfangsfläche des Stutzens befinden sich weiterhin zwei einander diametral gegenüberliegende, nach außen über die Umfangsfläche des Stutzens 22 hervorstehende Rasten 26, die sich in Umfangsrichtung nur so weit erstrecken, daß zwischen ihnen ein Winkelbereich freibleibt, der mindestens so groß ist wie der Winkelbereich, über den sich die Rastvorsprünge an der Innenwand der Hülse 7 erstrecken. Umgekehrt erstrecken sich die Rasten 26 über einen Winkelbereich, der kleiner ist als der freie Innenwandbereich zwischen den Rastvorsprüngen 12 der Hülse 7.

Jede Raste 26 trägt auf ihrer dem freien Ende des Stutzens abgewandten Seite eine Rastnase 27, deren Form im wesentlichen der Form der Ausnehmung 13 im Rastvorsprung 12 der Hülse 7 komplementär ist. Die Rastnase 27 wird also auf der dem freien Ende abgewandten Seite durch eine umfangsparallele Parallelfläche 28 begrenzt, an die sich auf der einen Seite eine achsparallele Seitenfläche 29 und auf der anderen Seite eine schräg zur Längsachse verlaufende Gleitfläche 30 anschließen, wobei die Neigung der Gleitfläche 30 so gewählt ist, daß die Rastnase zu ihrem freien Ende hin schmaler wird (Figuren 2 und 3). Die Gleitfläche 30 läuft über die gesamte axiale Erstreckung der Raste 26 bis zu einer umfangsparallelen Stirnfläche 31, während die achsparallele Seitenfläche 29 nur über einen Teil der axialen Erstreckung der Raste 26 bis zu einer umfangsparallelen Stirnfläche 32 läuft, wobei die beiden Stirnflächen 31 und 32 zwischen sich einen umfangsparallelen, ringschulterförmigen Rastenteil einschließen.

Zur Herstellung einer Schlauchverbindung wird der Stutzen 22 auf der offenen Seite in die Hülse 7 eingeführt. Dabei wird die Winkelstellung zwischen Hülse und Stutzen so gewählt, daß die Rasten 26 des Stutzens durch die Umfangsbereiche 20 mit größerem Innendurchmesser in die Hülse eingeschoben werden können, wobei die Rastvorsprünge an der Innenwand der Hülse zwischen den Rasten 26 des Stutzens hindurchgleiten können. Anschließend wird der Stutzen gegenüber der Hülse so verdreht, daß die Gleitfläche 30 der Rasten 26 an der Gleitfläche 17 der Rastvorsprünge entlanggleitet, wodurch der Stutzen gleichzeitig auch in axialer Richtung weiter in die Hülse eingeschoben wird. Dabei gelangen die Stirnflächen 31 der Rasten 26 an der Druckfeder 9 zur Anlage und drücken diese zusammen, wobei sich die Druckfeder von den Rastvorsprüngen abhebt. Gleichzeitig wird bei dieser Bewegung der Stutzen mit seinem freien Ende in den Schlauchnippel eingeschoben. Bei der weiteren Verdrehung des Stutzens gegenüber der Hülse gelangt schließlich die Parallelfläche 28 der Rasten über die von den Gleitflächen 17 und die seitliche Begrenzungsfläche 15 gebildete Kante der Rastvorsprünge hinweg in den Bereich der Ausnehmung 13. Unter der Wirkung der komprimierten Druckfeder 9 wird nunmehr der Stutzen so verschoben, daß die Rastnasen 27 der Rasten 26 in die Ausnehmungen 13 der Rastvorsprünge 12 einrasten, wie dies aus der Darstellung der Fig. 2 erkennbar ist, in welcher eine Raste 26 des Stutzens ausgezogen dargestellt ist, während ein Rastvorsprung der Hülse mit strichpunktierten Linien angedeutet ist. In dieser Stellung liegt die Ringdichtung 25 in der in Fig. 1 dargestellten Weise an der wulstförmigen Verdickung 6 der Innenwand 5 des Schlauchnippels 2 an, so daß in diesem Bereich eine wirkungsvolle Dichtung entsteht. Stutzen und Nippel können in dieser Stellung in axialer Richtung nicht mehr auseinandergezogen werden. Eine Verdrehung der beiden Teile gegeneinander ist ebenfalls nicht ohne weiteres möglich, da die Druckfeder die Rastnasen 27 in die Ausnehmungen 13 hineinschiebt, die dort im wesentlichen formschlüssig gesichert sind.

Wird nunmehr die Schlauchleitung unter Druck gesetzt, werden die beiden Teile unter der Wirkung des Druckabfalls in der Leitung auseinandergezogen und sicher fixiert. Es ist für eine Bedienungsperson im Betrieb unmöglich, die beiden Teile gegen die Druckkräfte im Schlauch axial aufeinander zu schieben und somit voneinander zu lösen.

Ein Lösen der Schlauchverbindung ist erst möglich, wenn der Schlauch wieder druckfrei ist. Um die Verbindung zu lösen, werden dann in umgekehrter Weise Stutzen und Hülse in axialer Richtung gegeneinander verschoben, wobei die Druckfeder komprimiert wird. Diese Verschiebung kann wieder durch eine Drehung der beiden Teile gegeneinander erreicht werden, da bei dieser Drehung die Gleitflächen 30 der Rasten auf den Gleitflächen 16 der Rastvorsprünge entlanggleiten. Sobald die Druckfeder komprimiert ist, werden Hülse und Stutzen in entgegengesetzter Richtung gegeneinander verdreht, bis die Rasten 26 wieder mit den Umfangsbereichen 20 größeren Innendurchmessers fluchten. In dieser Winkelstellung läßt sich der Stutzen aus der Hülse herausziehen.

Bei einem in der Zeichnung nicht dargestellten, abgewandelten Ausführungsbeispiel kann die Formgebung der Ausnehmungen 13 und der komplementär dazu ausgebildeten Rastnasen 27 dadurch abgewandelt werden, daß der Boden 14 und die seitlichen Begrenzungsflächen 15 durch eine einzige schräg verlaufende Fläche ersetzt werden, die in entgegengesetzter Richtung geneigt ist wie die Gleitflächen 16 und 17. In gleicher Weise werden die Parallelfläche 28 und die Seitenfläche 29 durch eine einzige schräge Fläche ersetzt, die entgegen der Gleitfläche 30 geneigt ist.

Vorteilhaft ist auch, daß beim Einführen des Stutzens in die Hülse eine Verdrehung der beiden Teile nur in einer Richtung möglich ist, bei einer Verdrehung in entgegengesetzter Richtung stoßen die Rasten 26 an den achsparallelen Seitenflächen 18 der Rastvorsprünge an und verhindern eine Verdrehung in dieser Richtung.

**Patentansprüche**

1. Verbindungsstück für Schlauchleitungen von Hochdruckreinigungsgeräten und Hochdrucksprühgeräten mit einem an einem Schlauchleitungsende angeordneten, eine durchgehende Innenbohrung aufweisenden Nippel (2) und mit einen, in dichter Verbindung an diesen anlegbaren, am anderen Schlauchleitungsende angeordneten Stutzen (22), wobei der Nippel (2) eine Innendichtfläche (Innenwand 5, Verdickung 6) aufweist und von einer an ihrer dem Schlauch abgewandten Seite offenen Hülse (7) überfangen ist, welche gegen eine Verschiebung in Richtung auf das freie Ende des Nippels (2) gesichert ist, die Hülse (7) an ihrer Innenseite in den Innenraum der Hülse (7) ragende, winkelmäßig zwischen sich einen Wandbereich (11) freilassende Rastvorsprünge (12) trägt, und der Stutzen (22) eine äußere Dichtfläche (Ringdichtung 25) aufweist, die bei in den Nippel (2) eingeschobenem Stutzen (22) dichtend an der Innendichtfläche (5, 6) des Nippels (2) anliegt, der Stutzen (22) an seinen Außenwand nach außen ragende Rasten (26) trägt, die winkelmäßig in gleicher Weise versetzt sind wie die Rastvorsprünge (12) der Hülse (7), und sich die Rasten (26) nur über einen Winkel erstrecken, der höchstens so groß ist wie der von den Rastvorsprüngen (12) freie Winekbereich (20) an der Innenwand (11) der Hülse (7), dadurch gekennzeichnet, daß die Rastvorsprünge (12) der Hülse (7) auf ihrer dem Schlauchende zugewandten Seite eine zu dieser Seite hin offene, in Umfangsrichtung an beiden Seiten begrenzte Ausnehmung (13) aufweisen, daß zwischen der Innenwand (11) der Hülse (7) und dem Nippel (2) eine Druckfeder (9) angeordnet ist, die sich einerseits an einem schlauchnahen Vorsprung (Ringschulter 10) der Hülse (7) und andererseits an der Rastvorsprüngen (12) abstützt, daß die Rasten (26) auf ihrer dem dem Stutzen (22) zugeordneten Schlauchende zugewandten Seite in die Ausnehmungen (13) der Rastvorsprünge (12) eintauchende Rastnasen (27) tragen und daß der Stutzen (22) Anlageflächen (Stirnflächen 31) für die Druckfeder (9) aufweist, an denen die Druckfeder (9) bei eingeschobenem Stutzen (22) anliegt und den Stutzen (22) mit seinen Rastnase (27) in die Ausnehmungen (13) der Rastvorsprünge (12) verschiebt.

2. Verbindungsstück nach Anspruch 1, dadurch gekennzeichnet, daß die Hülse (7) auf dem Nippel (2) axial verschieblich ist und der Nippel (2) einen stufenförmig sich erweiternden Endbereich aufweist, den die Hülse (7) mit einem an ihrem schlauchseitigen Ende angeordneten, nach innen ragenden Ringflansch (8) hintergreift.

3. Verbindungsstück nach Anspruch 1 oder 2, dadurch gekennzeichnet, daß die Innendichtfläche des Nippels (2) wulstartig in die Innenbohrung (3) des Nippels (2) hineinragt.

4. Verbindungsstück nach einem der voranstehenden Ansprüche, dadurch gekennzeichnet, daß der Stutzen (22) als Dichtfläche eine in einer Außenringnut (24) des Stutzens (22) eingelegte Ringdichtung (25) trägt.

5. Verbindungsstück nach einem der voranstehenden Ansprüche, dadurch gekennzeichnet, daß die Rastvorsprünge (12) sich bis an das freie Ende der Hülse (7) hin ersstrecken und dadurch am offenen Ende der Hülse (7) Umfangsbereiche (19) mit geringerem Innendurchmesser und Umfangsbereiche (20) mit größerem Innendurchmesser bilden.

6. Verbindungsstück nach einem der voranstehenden Ansprüche, dadurch gekennzeichnet, daß die Anlageflächen (31) für die Druckfeder (9) durch die Rasten (26) des Stutzens (22) gebildet werden.

7. Verbindungsstück nach einem der voranstehenden Ansprüche, dadurch gekennzeichnet, daß die Rastnasen (27) an den Rasten (26) zumindest einseitig durch eine Gleitfläche (30) begrenzt sind, die in einer schräg zur Stuzenlängsachse verlaufenden Ebene liegt, wobei die Rastnase (27) zu ihrem freien Ende hin schmaler wird, und daß die Ausnehmung (13) im zugeordneten Rastvorsprung (12) der Hülse (7) komplementär ausgebildet ist.

8. Verbindungsstück nach Anspruch 7, dadurch gekennzeichnet, daß die Rastnase (27) auf ihrer der Gleitfläche (30) gegenüberliegenden Seite eine parallel zur Stutzenlängsachse verlaufende Seitenfläche (29) aufweist.

9. Verbindungsstück nach Anspruch 7, dadurch gekennzeichnet, daß die Rastnase (27) auf ihrer der Gleitfläche (30) gegenüberliegenden Seite ebenfalls durch eine schräge Seitenfläche begrenzt ist, die entgegen der Gleitfläche (30) geneigt ist.

10. Verbindungsstück nach einem der Ansprüche 1 bis 8, dadurch gekennzeichnet, daß die Rastnase (27) an ihrem freien Ende durch eine Parallelfläche (28) begrenzt ist, die in einer senkrecht zur Stutzenlängsachse verlaufenden Ebene liegt.

11. Verbindungsstück nach einem der voranstehenden Ansprüche, dadurch gekennzeichnet, daß je zwei Rastvorsprünge (12) bzw. Rasten (26) vorgesehen sind, die sich paarweise diametral gegenüberliegen.

12. Verbindungsstück nach Anspruch 11, dadurch gekennzeichnet, daß sich Rastvorsprünge (12) und Rasten (26) in Umfangsrichtung jeweils weniger als 90° erstrecken.

13. Verbindungsstück nach einem der Ansprüche 7 bis 12, dadurch gekennzeichnet, daß die Rastvorsprünge schräg zur Hülsenlängsachse verlaufende Gleitflächen (17) aufweisen, an denen die Gleitflächen (30) der Rastnasen beim Einschieben des Stutzens in die Hülse und bei einer Verdrehung des Stutzens gegenüber der Hülse in der Weise zur Anlage kommen, daß der Stutzen (22) beim weiteren Verdrehen gegenüber der Hülse (7) in axialer Richtung in den Nippel (2) und in die Hülse (7) eingeschoben wird.

14. Verbindungsstück nach Anspruch 13, dadurch gekennzeichnet, daß die Rastvorsprünge auf der der Gleitfläche (17) gegenüberliegenden Seite durch eine achsparallele Seitenfläche (18) begrenzt werden, die eine Anschlagfläche für die Rasten (26) des Stutzens (22) bilden und eine Verdrehung des Stutzens (22) gegenüber der Hülse (7) in entgegengesetzter Richtung verhindern.

**Claims**

1. A connection member for hose pipes of high-pressure cleaning and spraying apparatus, the connection apparatus member having a nipple (2) disposed on one end of the hose pipe and comprising a continuous internal bore, and a socket (22) disposed on the other end of the hose pipe and being tightly joinable to the nipple (2), the nipple (2) comprising an inner sealing surface (inner wall 2, thickened portion 6) and being covered by a sleeve (7), the sleeve being open on the side thereof remote from the hose and being prevented from displacement in the direction of the free end of the nipple (2), the sleeve (7) being provided with catch projections (12) on the interior thereof, the catch projections projecting into the interior of the sleeve (7) leaving free an intermediate angular area of the wall (11), the socket (22) comprising an outer sealing surface (annular seal 25) bearing in a sealing manner against the inner sealing surface (5, 6) of the nipple (2) when the socket (22) is inserted into the nipple (2), the socket (22) being provided with projections (26) on the outer wall thereof, the projections projecting outwards and being angularly displaced in the same way as the catch projections (12) of the sleeve (7), the projections (26) extending only over an angle which at most is as great as the intermediate angular area (20) on the inner wall (11) of the sleeve (7), characterized in that the catch projections (12) of the sleeve (7) are provided with a recess (13) on the side of the catch projections facing the end of the hose, the recess being open towards the said side and being bounded on both sides in the circumferential direction, that a compression spring (9) is disposed between the inner wall (11) of the sleeve (7) and the nipple (2), the spring being supported on the one hand on a projection (annular shoulder 10) of the sleeve (7) adjacent the hose and on the other hand on the catch projections (12), that the catches (26) are provided with catch studs (27) on the side thereof facing the hose end associated with the socket (22), the catch studs projecting into the recesses (13) of the catch projections (12), and that the socket (22) comprises bearing surfaces (end surfaces 31) for the compression spring (9), the compression spring (9) bearing on the surfaces when the socket (22) is inserted and displacing the socket (22) with the catch studs (27) into the recesses (13) of the catch projections (12).

2. A connection member according to Claim 1, characterized in that the sleeve (7) is axially displaceable on the nipple (2), and the nipple (2) has an end region which is enlarged in a stepped manner and behind which the sleeve (7) engages with an inwardly projecting annular flange (8) disposed on the end thereof towards the hose.

3. A connection member according to Claim 1 or 2, characterized in that the inner sealing surface of the nipple (2) extends into the inner bore (3) of the nipple (2) in the manner of a ridge.

4. A connection member according to any one of the preceding Claims, characterized in that the socket (22) is provided with an annular seal (25) inserted into an outer annular groove (24) in the socket (22) as a sealing surface.

5. A connection member according to any one of the preceding Claims, characterized in that the catch projections (12) extend as far as the free end of the sleeve (7) and thus form areas (19) of the periphery having a smaller internal diameter and areas (20) of the periphery having a greater internal diameter at the open end of the sleeve (7).

6. A connection member according to any one of the preceding Claims, characterized in that the bearing surfaces (31) for the compression spring (9) are formed by the catches (26) of the socket (22).

7. A connection member according to any one of the preceding Claims, characterized in that the catch studs (27) on the catches (26) are bounded at least on one side by a sliding surface (30) lying in a plane inclined to the longitudinal axis of the socket (22), wherein the catch stud (27) becomes narrower towards the free end thereof, and that the recess (13) is formed in a complementary manner in the associated catch projection (12) of the sleeve (7).

8. A connection member according to Claim 7, characterized in that the catch stud (27) has a flat surface (29) on the side thereof opposite the sliding surface (30), the flat surface extending parallel to the longitudinal axis of the socket (22).

9. A connection member according to Claim 7, characterized in that the catch stud (27) is likewise bounded on the side thereof opposite the sliding surface (30) by an oblique flat surface, the flat surface being inclined contrary to the sliding surface (30).

10. A connection member according to any one of Claims to 8, characterized in that the catch stud (27) is bounded at the free end therof by a parallel surface (28) lying in a plane extending perpendicularly to the longitudinal axis of the socket (22).

11. A connection member according to any one of the preceding Claims, characterized in that two catch projections (12) or catches (26) are provided in each case, the catch projections or catches being paired diametrically opposite one another.

12. A connection member according to Claim 11, characterized in that the catch projections (12) and catches (26) each extend less than 90° in the peripheral direction.

13. A connection member according to any one of Claims 7 to 12, characterized in that the catch projections comprise sliding surfaces (17) inclined to the longitudinal axis of the sleeve (7) whereon the sliding surfaces (30) of the catch studs come to rest when the socket is inserted into the sleeve and is turned relative to the sleeve, such that as the socket (22) is turned further relative to the sleeve (7), the socket is pressed into the nipple (2) and into the sleeve (7) in an axial direction.

14. A connection member according to Claim 13, characterized in that the catch projections on the side opposite the sliding surface (17) are bounded by an axially parallel flat surface (18) which forms a stop surface for the catches (26) of the socket (22) and prevents the socket (22) from turning relative to the sleeve (7) in the opposite direction.

## Revendications

1. Raccord pour tuyaux d'appareils de nettoyage à haute pression et d'appareils de pulvérisation à haute pression, comprenant un embout (2) monté à un bout de la canalisation et qui présente un alésage intérieur traversant, et une tubulure (22) montée à l'autre bout de la canalisation et qui peut être assemblée à l'embout en formant un raccordement étanche, l'embout (2) présentant une surface d'étanchéité intérieure (paroi intérieure 5, renflement 6) et étant entouré par une douille (7) ouverte sur son côté le plus éloigné du tuyau et qui est arrêtée dans le sens de la translation vers l'extrémité libre de l'embout (2), la douille (7) portant, sur son côté intérieur, des bossages d'arrêt (12) qui font saillie dans le volume intérieur de la douille (7) et laissent entre eux une région de paroi (11) libre sur un intervalle angulaire, la tubulure (22) présentant une surface d'étanchéité extérieure (bague d'étanchéité 25) qui, lorsque la tubulure (22) est emmanchée dans l'embout (2), est appuyée à joint étanche contre la surface d'étanchéité intérieure (5, 6) de l'embout (2), la tubulure (22) portant sur sa paroi extérieure, des arrêts (26) qui font saillie vers l'extérieur et qui sont décalés dans la direction angulaire de la même façon que les bossages d'arrêt (12) de la douille (7) et les arrêts (26) ne s'étendant que sur un angle qui est au maximum égal à l'intervalle angulaire (20) de la paroi intérieure (11) de la douille qui est laissée libre par les bossages d'arrêt (12), caractérisé en ce que les bossages d'arrêt (12) de la douille (7) présentent, sur leur côté dirigé vers le bout du tuyau, une encoche (13) ouverte vers ce côté et limitée dans la direction circonférentielle sur les deux côtés, en ce que, entre la paroi intérieure (11) de la douille (7) et l'embout (2), est disposé un ressort de compression (9) qui prend appui, d'un côté, contre un bossage proche du tuyau (épaulement annulaire 10) de la douille (7) et, de l'autre, contre les bossages d'arrêt (12), en ce que les arrêts (26) portent, sur leur côté dirigé vers le bout de tuyau associé à la tubulure (22), des dents d'arrêt (27) qui plongent dans les encoches (13) des bossages d'arrêt (12) et en ce que la tubulure (22) présente des surfaces de portée (surfaces frontales 31) donnant appui au ressort de compression (9), surfaces contre lesquelles le ressort de compression (9) prend appui lorsque la tubulure (22) est emmanchée, pour engager la tubulure (22), par ses dents d'arrêt (27), dans les encoches (13) des bossages d'arrêt (12).

2. Raccord selon la revendication 1, caractérisé en ce que la douille (7) est montée mobile en translation axiale sur l'embout (2) et en ce que l'embout (2) présente une région d'extrémité qui s'élargit en formant un gradin et derrière laquelle la douille (7) est accrochée par une collerette annulaire (6) qui fait saillie vers l'intérieur et qui est prévue sur son extrémité côté tuyau.

3. Raccord selon la revendication 1 ou 2, caractérisé en ce que la surface d'étanchéité intérieure de l'embout (2) forme une saillie en bourrelet dans l'alésage intérieur (3) de l'embout (2).

4. Raccord selon l'une des revendications précédentes, caractérisé en ce que la tubulure (22) porte, en qualité de surface d'étanchéité, une bague d'étanchéité (25) qui est logée dans une gorge annulaire extérieure (24) de la tubulure (22).

5. Raccord selon l'une des revendications précédentes, caractérisé en ce que les bossages d'arrêt (12) s'étendent jusqu'à l'extrémité libre la douille (7) et, de cette façon, forment à l'extrémité libre de la douille (7), des régions circonférentielles (19) de petit diamètre intérieur et des régions circonférentielles (20) de grand diamètre intérieur.

6. Raccord selon l'une des revendications précédentes, caractérisé en ce que les surfaces de portée (31) pour le ressort de compression (9) sont formées par les arrêts (26) de la tubulure (22).

7. Raccord selon l'une des revendications précédentes, caractérisé en ce que les dents d'arrêt (27) portées par les arrêts (27) sont limitées, du moins d'un côté, par une surface de glissement (30) qui est contenue dans un plan s'étendant obliquement à l'axe longitudinal de la tubulure, la dent d'arrêt (27) se rétrécissant vers son extrémité libre, et l'encoche (13) formée dans le bossage d'arrêt (12) correspondant de la douille (7) étant de configuration complémentaire.

8. Raccord selon la revendication 7, caractérisé en ce que la dent d'arrêt (27) présente, sur son côté qui est à l'opposé de la surface de glissement (30), une surface latérale (29) s'étendant parallèlement à l'axe longitudinal de la tubulure.

9. Raccord selon la revendication 7, caractérisé en ce que la dent d'arrêt (27) est aussi limitée sur son côté qui est à l'opposé de la surface de glissement (30) par une surface latérale oblique qui est inclinée en sens inverse de la surface de glissement (30).

10. Raccord selon l'une des revendications 1 à 6, caractérisé en ce que la dent d'arrêt (27) est limitée, à son extrémité libre, par une surface parallèle (28) qui est contenue dans un plan s'étendant perpendiculairement à l'axe longitudinal de la tubulure.

11. Raccord selon l'une des revendications précédentes, caractérisé en ce qu'il est prévu deux bossages d'arrêt (12) et deux arrêts (26) qui sont diamétralement opposés dans chaque paire.

12. Raccord selon la revendication 11, caractérisé en ce que les bossages d'arrêt (12) et les arrêts (26) s'étendent chacun sur moins de 90° dans la direction circonférentielle.

13. Raccord selon l'une des revendications 7 à 12, caractérisé en ce que les bossages d'arrêt présentent des surfaces de glissement (17) qui s'étendent obliquement à l'axe longitudinal de la douille et sur lesquelles les surfaces de glissement (30) des dents d'arrêt viennent porter lorsqu'on emmanche la tubulure dans la douille et qu'on fait tourner la tubulure par rapport à la douille, de telle sorte que, lorsqu'on continue à faire tourner la tubulure (22) par rapport à la douille (7), cette tubulure s'engage dans la direction axiale dans l'embout (2) et dans la douille (7).

14. Raccord selon la revendication 13, caractérisé en ce que les bossages d'arrêt sont limités, sur le côté qui est à l'opposé de la surface de glissement (17), par une surface latérale (18) parallèle à l'axe, qui forme une surface de butée pour les arrêts (26) de la tubulure (22) et empêche la tubulure (22) de tourner dans le sens opposé par rapport à la douille (7).

# Fig. 1

# Fig. 3

# Fig. 2

# Fig. 5

# Fig. 4